# EUROPEAN PATENT APPLICATION

(11) **EP 1 936 618 A2**
(43) Date of publication of application: **25.06.2008**
(21) Application number: 07254281.4
(22) Date of filing: 30.10.2007
(51) Int. Cl.: G11B 7/135

(54) **Optical pickup having optical path length correction function**

(30) Priority: 18.12.2006 JP 2006339457; 05.09.2007 JP 2007230048
(71) Applicant: Sanyo Electric Co., Ltd., Moriguchi-shi, Osaka-fu (JP); Sanyo Optec Design Co., Ltd., Tokyo (JP)
(72) Inventor: Kawasaki, Ryoichi, Gunma 372-0122 (JP); Nakamura, Shigeru, Tokyo, 190-0022 (JP); Yamamoto, Tsuyoshi, Ota-shi, Gunma 373-0807 (JP)
(74) Representative: Cross, Rupert Edward Blount

(57) **Abstract**

An optical pickup configured so as to reproduce signals recorded in optical disks of plural standards by means of a single laser beam. The optical pickup has an objective lens (5) for gathering a laser beam emitted from a semiconductor laser (1) - which emits a laser beam of single wavelength - onto a signal recording layer provided in each of optical disks of first (D1) and second (D2) standards whose cover layers differ from each other in terms of a thicknesses. The first standard is; for example, a CD, and the second standard is; for example, a DVD. An optical path length correction member (6) - in which there is formed an optical path length correction section for making a correction to an optical path length falling within a range smaller than the diameter of a light beam passing through the objective lens - is provided in an optical path between the semiconductor laser and the objective lens. The optical path length correction section may also be formed on a lens plane of the objective lens facing the semiconductor laser.

## Description

### BACKGROUND OF THE INVENTION

### Technical Field

The present invention relates to an optical pickup configured so as to read signals recorded on optical disks complying with a plurality of standards by means of a laser beam emitted from a single laser light source.

### Related Art

There has hitherto been known an optical disk drive capable of performing operation for reproducing or recording a signal by means of radiating a laser beam emitted from an optical pickup device onto a signal recording layer provided in an optical disk. An optical disk drive using an optical disk called compliant with CD standards (hereinafter described as a "CD-standard optical disk) and an optical disk compliant with DVD standards (hereinafter described as a "DVD-standard optical disk") has especially become widespread among the general public.

In an optical disk, a transparent cover layer for protecting a signal recording layer from flaws, dust, and others, is interposed between the signal recording layer where a signal is recorded and a plane of incidence (hereinafter called an "incidence plane") where a laser beam enters. This cover layer of the CD-standard optical disk is set to a thickness of 1.2 mm. This cover layer of the DVD-standard optical disk is set to a thickness of 0.6 mm.

A semiconductor laser which emits a laser beam is incorporated in an optical pickup provided in an optical disk drive capable of using the previously-configured optical disks. Infrared light is employed as a laser beam used for reproducing a signal recorded in the previous CD-standard optical disk, and red light is employed as a laser beam used for reproducing a signal recorded in the previous DVD-standard optical disk.

An optical disk drive capable of using optical disks compliant with a plurality of standards; namely, the DVD-standard optical disk as well as the CD-standard optical disk, uses an optical pickup device capable of reproducing signals recorded in the optical disks compliant with both standards. Two semiconductor lasers which each emit a laser beam of infrared light and a laser beam of red light are generally incorporated into the optical pickup.

An optical pickup having two built-in semiconductor lasers suffers a problem of complication of the structure of an optical system constituting an optical path for guiding a laser beam emitted fromeach of the semiconductor lasers to a signal recording layer of an optical disk and an optical path for guiding the laser beam reflected from the signal recording layer to a photodetector. Further, the optical pickup suffers a problem of an increase in manufacturing cost because of use of the two semiconductor lasers.

7-98431 A and 10-208276 A describe, as a method for solving such problems, an optical pickup capable of reproducing signals recorded in optical disks of different standards by use of a single semiconductor laser.

According to these related-art techniques, when a DVD-standard optical disk is used by use of a diffraction lens element, a hologram element, or the like, the optical pickup is configured so as to use zero-order diffracted light in the center diffraction area and a beam passing outside a peripheral diffraction area. When a CD-standard optical disk is used, the optical pickup is configured so as to use first-order diffracted light in the center diffraction area.

However, according to such a configuration, the light beam in the center diffraction area is divided into the zero-order diffracted light and the first-order diffracted light at all times. For this reason, when the DVD-standard optical disk is used, the first-order diffracted light is not used. In contrast, when the CD-standard optical disk is used, the zero-order diffracted light is not used. Consequently, there arises a problem of inability to acquire a sufficient amount of light for the light beam.

### SUMMARY OF THE INVENTION

An optical pickup of the present invention includes
a semiconductor laser which emits a laser beam of single wavelength;
an objective lens for gathering a laser beam emitted from the semiconductor laser onto a signal recording layer provided in each of optical disks of first and second standards whose cover layers differ from each other in terms of a thicknesses; and
an optical path length correction member which is provided in an optical path between the semiconductor laser and the objective lens and in which there is formed an optical path length correction section for making a correction to an optical path length in a range smaller than the diameter of a light beam passing through the objective lens.

In one embodiment of the present invention, the optical path length correction section makes a correction to an optical path length of a light beam passing through a range which is a minus quarter or more to a plus quarter or less of a laser wavelength with reference to an optical path length of a center portion of the light beam.

In another embodiment of the present invention, the optical path length correction section is provided on a lens plane of the objective lens.

The invention will be more clearly comprehended by reference to the embodiments provided below. However, the scope of the invention is not limited to the embodiment provided below.

### BRIEF DESCRIPTION OF THE DRAWINGS

A preferred embodiment of the present invention will be described in detail by reference to the following drawings, wherein:
Fig. 1 is a schematic diagram showing an embodiment of an optical pickup of the present invention;
Fig. 2 is a cross-sectional view of an optical path length correction member constituting the optical pickup of the present invention;
Fig. 3 is a plan view of the optical path length correction member constituting the optical pickup of the present invention;
Fig. 4 is a schematic view showing another embodiment of the optical pickup of the present invention;
Fig. 5 is a cross-sectional view of an optical path length correction member constituting the optical pickup of the present invention; and
Fig. 6 is a view for describing a cross-sectional profile of the optical path length correction member constituting the optical pickup of the present invention.

### DETAILED DESCRIPTION

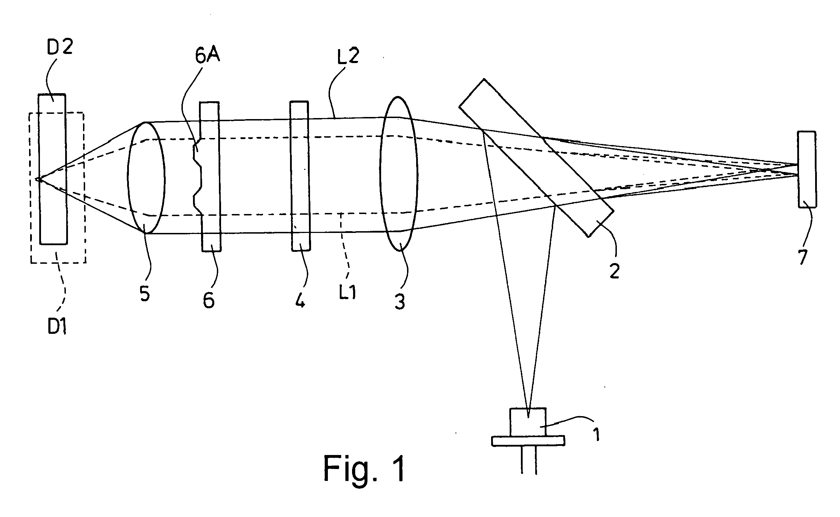

Fig. 1 shows the configuration of an optical pickup of an embodiment. In Fig. 1, a semiconductor laser 1 emits a laser beam of a single wavelength. A reflection coating-on which a laser beam emitted from the semiconductor laser 1 is incident and which reflects the laser beam-is formed on a polarization beam splitter 2. The polarization beam splitter 2 has the function of imparting astigmatism to the laser beam reflected from the optical disk and letting the astigmatism-imparted laser beam transmit in unmodified form. The polarization beam splitter 2 of such a configuration is well known.

A collimator lens 3 is placed at a position on which the laser beam reflected from a reflection coating formed on the polarization beam splitter plate 2 is incident; and has the function of collimating the incident laser beam that is diverging light. The laser beam collimated by the collimator lens 3 enters a quarter wavelength plate 4, and the quarter wavelength plate 4 transforms the laser beam from plane polarized light into circular polarized light.

An objective lens 5 gathers the laser beam-which has entered the objective lens after having passed through the quarter wavelength plate 4-on a signal recording layer provided in the optical disk. The objective leans 5 is fixed to a lens holder which is provided so as to be movable in a focusing direction perpendicular to a signal plane of the optical disk as well as in a tracking direction corresponding to a radial direction of the optical disk. A focusing coil and a tracking coil are attached to the lens holder. The focusing coil is supplied with a focus drive signal generated from a focus error signal, and the tracking coil is supplied with a tracking drive signal generated from a tracking error signal. In synergistic cooperation with a magnetic field developing from a magnet fixed to a stationary substrate, the lens holder is configured so as to be driven and displaced in the focusing direction and the tracking direction.

Reference numeral D1 indicated by a broken line in the drawing designates an optical disk compliant with a first standard (hereinafter called a"first-standard opticaldisk");for example, the CD-standard optical disk, and a protective film of the disk has a thickness of 1.2 mm. Reference numeral D2 indicated by a slid line in the drawing designates an optical disk compliant with a second standard (hereinafter called a "second-standard optical disk") ; for example, the DVD-standard optical disk, and a protective film of the disk has a thickness of 0.6 mm. A locus L1 of the laser beam indicated by the broken line shows a light beam used for generating a spot for use in reproducing a signal recorded on the first-standard optical disk D1. A locus L2 of the laser beam indicated by the solid line shows the light beam used for generating a spot which performs operation for reproducing a signal recorded in the second-standard optical disk D2.

The drawing shows that a plane of incidence of light (hereinafter called a "light incidence plane") of the first-standard optical disk D1 is positioned closer to the objective lens 5 than is a light incidence plane of the second-standard optical disk D2. This drawing illustrates, for the sake of convenience, a difference between a distance from the light incidence plane of the optical disk D1 to the objective lens 5 and a distance from the light incidence plane of the optical diskD2; namely, a difference between working distances. However, in an actual optical disk drive, the light incidence plane of the optical disk D1 and the light incidence plane of the optical disk D2 are positioned at the same location. When the first-standard optical disk D1 is used, the objective lens 5 is caused to approach closer to the optical disk D1 when compared with the case where the second-standard optical disk D2 is used, by means of supplying the drive signal to the focusing coil.

The optical path length correction member 6 is provided in the optical path between the semiconductor laser 1 and the objective lens 5, and details of the correction member will be described later. A photodetector 7 is disposed at a position where the photodetector is exposed to the laser beam that has undergone reflection on the optical disk D1 or D2 and has passed through the polarization beam splitter plate 2. The photodetector 7 is formed from a well-known quarter sensor.

The laser beam radiated onto the quarter sensor constituting the photodetector 7 is imparted with astigmatism by the polarization beam splitter plate 2. Hence, operation for generating a focus error signal according to an astimatistic technique can be performed. Specifically, as is well known, signals acquired from diagonally-opposing sensor sections among four sensor sections constituting the quarter sensor are added together, and a difference between resultant two signals is determined, whereupon a focus error signal can be generated.

Further, all signals acquired from all of the sensor sections of the quarter sensor constituting the photodetector 7 are added together, whereupon a high-frequency signal derived from the signal recorded in the optical disk D1 or D2 can be obtained. Operation for reproducing a data signal recorded on the optical disk D1 or D2 can be performed by means of demodulating this signal.

At the time of reproduction of data, the laser beam emitted from the semiconductor laser 1 enters the polarization beam splitter plate 2; subsequently undergoes reflection on the reflection coating provided on the polarization beam splitter 2; and then enters the collimator lens 3. In this way, the laser beam entering the collimator lens 3 in this way is diverging light but transformed into collimated light by means of the collimator lens 3.

The laser beam collimated by the collimator lens 3 is transformed from plane polarized light into circularly polarized light by means of the quarter wavelength plate 4, and subsequently enters the objective lens 5 by way of the optical path length correction member 6. The laser beam having thus entered the objective lens 5 is radiated onto the signal recording layer provided on the optical disk D1 or D2 by means of light-gathering action of the objective lens 5, thereby generating a spot of a shape appropriate for effecting reproduction operation, or the like.

The laser beam radiated on the signal recording layer undergoes interference from pits formed in the signal recording plane of the optical disk and is reflected as return light, and the return light enters the objective lens 5. The laser beaming having thus entered the objective lens 5 comes to enter the quarter wavelength plate 4 through the optical path length correction member 6. The laser beam entered the quarter wavelength plate 4 is transformed from the circular polarized light into plane polarized light by means of the quarter wavelength plate 4. The direction of polarization of the plane polarized light of the thus-transformed laser beam differs from the direction of polarization of the laser beam entered from the collimator lens 3.

Thus, the laser beam of plane polarized light of the different polarizing direction enters the polarization beam splitter plate 2 by way of the collimator lens 3. However, since the direction of polarization of this laser beam has already been changed, the laser beam does not undergo reflection on the reflection coating provided on the polarization beam splitter 2 and passes through the reflection coating as is.

The laser beam having passed through the polarization beam splitter plate 2 is radiated onto the quarter sensor provided in the photodetector 7 by means of light-gathering action of the collimator lens 3. The laser beam radiated onto the quarter sensor section provided in the photodetector 7 is imparted with astigmatism by means of the polarization beam splitter 2 as mentioned previously. Hence, operation for generating a focus error signal and operation for extracting a high-frequency signal can be performed.

Signal reproduction operation of the optical pickup of the present embodiment is performed as mentioned above. Next, the optical path length correction member 6 will be described.

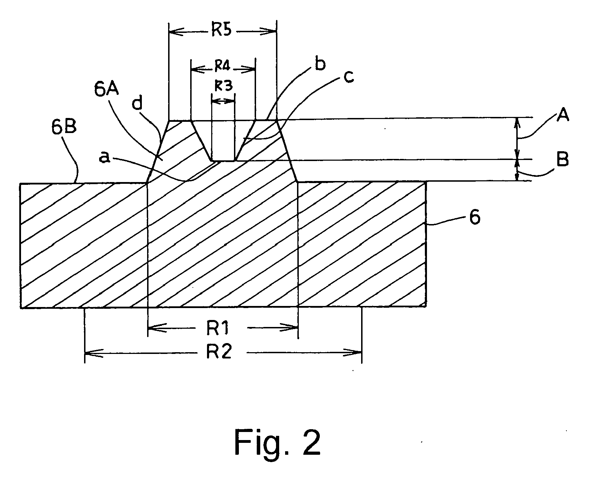

As shown in Fig. 2, the optical path length correction member 6 has an optical path length correction section 6A for making a correction to the optical path length of a transmitting laser beam.

As is evident from the loci L1 and L2 of the laser beam shown in Fig. 1, a numerical aperture of the objective lens achieved when there is performed operation for reproducing a signal recorded in the first-standard optical disk D1 becomes smaller than a numerical aperture of the objective lens achieved when there is performed operation for reproducing a signal recorded in the second-standard optical disk D2. The optical path length correction section 6A provided in the optical path length correction member 6 is placed within a range which is smaller than the diameter of a light beam from the objective lens of larger numerical aperture.

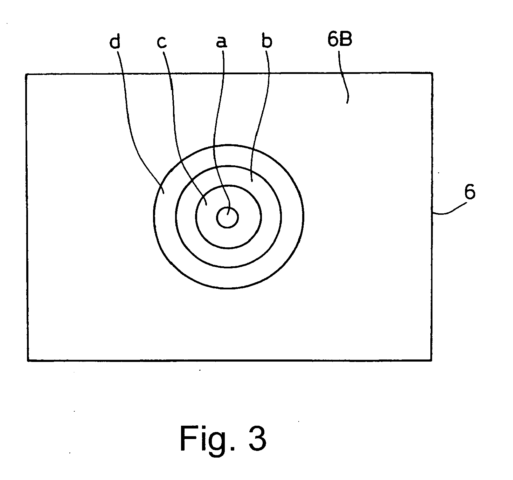

The optical path length correction section 6A includes a center circular section "a" provided in essentially the center of the optical path length member 6; a toric section "b" formed outside the center circular section "a" so as to enclose the section "a"; an inner-inclined section "c" or a tapered section "c" interposed between the center circular section "a" and the toric section "b"; and an outer-inclined section "d" or a tapered section "d" interposed between the toric section "b" and a flat plate section 6B of the optical path length correction member 6 where the optical path length correction section 6A is not formed. As is illustrated in a plan view of Fig. 3, the center circular section "a", the inner inclined section "c", the toric section "b", and the outer inclined section "d" are formed in a concentric pattern. The center circular section "a" is formed so as to protrude with respect to the plate section 6B of the optical path correction section 6; and the toric section "b" is formed so as to protrude much further than does the center circular section "a". A three-dimensional geometrical shape of the optical path length correction section 6A can be said to be the shape of a hollow circular truncated cone or the shape of a crater.

In Fig. 2, size R1 is a diameter of the optical path length correction section 6A. The value of the size R1 is set so as to coincide with an effective diameter of the light beam used for generating a spot which is used to reproduce a signal recorded in the first-standard optical disk D1. Size R2 designates an effective diameter of the light beam used for generating a spot which is used to reproduce a signal recorded in the second-standard optical disk D2 and serves as a diameter of an area where the objective lens 5 is used. From these descriptions, it is obvious that the diameter of the optical path length correction section 6A is smaller than the effective diameter of the light beam used for generating a beam which is used to reproduce a signal recorded in the second-standard optical disk D2.

In such a configuration, the laser beam that has passed through and has been collimated by the quarter wavelength plate 4 enters the objective lens 5 after having passed through the optical path length correction member 6 in a range indicated by size R2. At this time, the optical path length is changed by the optical path length correction member 6. Although the optical path length of the laser beam is changed by means of the optical path length correction section 6A provided in the optical path length correction member 6, a changed optical path length is set by means of a length to the toric section "b" with reference to the center circular section "a"; namely, a length indicated by size A shown in Fig. 2, and a length to the flat plate section 6B with reference to the center circular section "a"; that is, a length indicated by size B.

Provided that the wavelength of the laser beam is λ; a value determined by dividing an optical path length to be changed by the wavelength λ is Δλ; a refractive index of the optical path length correction member 6 is "n"; and the length of the optical path length correction section 6 used for changing the optical path length is Δd, the length is expressed as Δd = Δλ×λ/(n-1). Accordingly, the lengths A and B can be set according to the equation in such a way that the laser beam falling within the range indicated by the diameter R1 is transformed, by means of light-gathering operation of the objective lens 5, into a spot optimum for performing reproducing operation on the signal recording layer of the first-standard optical disk D1. Likewise, the lengths A and B are set in such a way that the laser beam falling within the range indicated by the diameter R2 is transformed, by means of light-gathering operation of the objective lens 5, into a spot which guarantees sufficient performance for performing reproducing operation on the signal recording layer of the second-standard optical disk D2.

The lengths A and B change between the case where a laser beam of a long wavelength-which is used as the semiconductor laser 1 and which is specified for the first-standard optical disk D1 of the first standard-is used and the case where a laser beam of a short wavelength which is specified for the second-standard optical disk D2 of the second standard is used.

There are exemplified specific numerals which enable reproduction of signals recorded on the optical disks D1 and D2 of different standards.

There will now be described a case where a CD-standard optical disk is used as the first-standard optical disk D1; where a DVD-standard optical disk is used as the second-standard optical disk; where a semiconductor laser-which emits a laserbeamhaving a wavelength of 785 nm used for reproducing a signal in a CD optical disk-is used as the semiconductor laser 1; and where a material having a refractive index of 1.57 at a wavelength of 785 nm; that is, polycarbonate of an optical plastic material, is used as the optical path length correction member 6.

In this case, the value of A is a value of Δd of the previously-described equation, and the value of a ratio of the value A with respect to a wavelength desired to be changed or corrected becomes Δλ. When Δd is determined on the assumption of Δλ = 0.25, we have Δd = 0.25 × 785 nm/(1.57 - 1); namely, 0.344 µm. As mentioned above, the distance A from the center circular section "a" of the optical path length correction section 6A to the toric section "b" is set to 0.344 µm.

Likewise, on the assumption that the value of B is the value of Δd and that there stands Δλ = 0.15, Δd is determined as Δd = 0.15 × 785 nm/(1.57 - 1); namely, 0.207 µm. Thus, the distance B from the center circular section "a" of the optical path length correction section 6A to the flat plate section 6B is set to 0.207 µm.

Provided that the diameter of the optical path length correction section 6A is 2.42 mm; that the value of the effective diameter R2 of the light beam is 4.06 mm; the value of the diameter R3 of the center circular section "a" is 0.28 mm; the value of an inner diameter R4 of the toric section "b" is set to 1.34 mm; and the value of an outer diameter R5 of the toric section "b" is taken as 1. 78 mm, the optical path length correction section 6A is formed in the optical path length correction section 6, whereby operation for recording signals recorded on the CD-standard optical disk and the DVD-standard optical disk can be performed.

The value A and the value B of the optical path length correction section 6A are for the case where a semiconductor laser-which emits a laser beam having a wavelength of 785 nm used for reproducing a signal on a CD optical disk-is used as the semiconductor laser 1. There will now be described a case where a semiconductor laser-which emits a laser beam having a wavelength of 660 nm used for reproducing a signal on a DVD optical disk-is used as the semiconductor laser 1. In this case, the refractive index of the optical path length correction member 6 assumes a value of 1.58 in response to a change in wavelength.

In such a case, the value of A is a value of Δd of the previously-described equation, and the value of a ratio of the value A with respect to a wavelength desired to be changed or corrected becomes Δλ. When Δd is determined on the assumption of Δλ = 0.151, we have Δd = 0.151 × 660 nm/(1.58 - 1); namely, 0.172 µm. As mentioned above, the distance A from the center circular section "a" of the optical path length correction section 6A to the toric section "b" is set to 0.172 µm.

Likewise, on the assumption that the value of B is the value of Δd and that there stands Δλ = 0.08, Δd is determined as Δd = 0.08 × 660 nm/(1.58 - 1); namely, 0.091 µm. Thus, the distance B from the center circular section "a" of the optical path length correction section 6A to the flat plate section 6B is set to 0.091 µm.

Provided that the diameter of the optical path length correction section 6A is 2.42 mm; that the value of the effective diameter R2 of the light beam is 4.06 mm; the value of the diameter R3 of the center circular section "a" is 0.28 mm; the value of an inner diameter R4 of the toric section "b" is set to 1.34 mm; and the value of an outer diameter R5 of the toric section "b" is taken as 1.78 mm, the optical path length correction section 6A is formed in the optical path length correction section 6, whereby operation for recording signals recorded on the CD-standard optical disk and the DVD-standard optical disk can be performed.

As mentioned previously, the center section "a" and the toric section "b" that constitute the optical path length correction section 6A formed in the optical path length correction member 6 are formed in a planar shape. A laser beampassing through these sections enters the objective lens 5 in parallel with the laser beam entering the optical path length correction member 6 from the direction of the quarter wavelength plate 4; namely, the laser beam enters the objective lens 5 while the direction of radiation of the laser beam remains unchanged.

In the meantime, the inner inclined section "c" and the outer inclined section "d", which constitute the optical path length correction section 6A formed in the optical path length correction member 6, are inclined. Hence, the direction of radiation of the laser beam passing through these sections is changed by means of refracting action of the laser beam entering the optical path length correction member 6 from the direction of the quarter wavelength plate 4. The laser beam refracted by means of the inner inclined section "c" and the outer inclined section "d" enters the objective lens 5. However, the laser beam whose direction of radiation has been changed by refracting action is radiated onto a signal recording layer provided on the CD-standard optical disk or onto a signal recording layer provided on the DVD-standard optical disk by means of the light-gathering action of the objective lens 5, thereby producing a desired spot.

As mentioned above, provision of the optical path length correction member 6 enables manufacture of an optical pickup capable of reproducing a signal recorded in optical disks of different standards, such as the CD standard and the DVD standard, by means of a laser beam originating from the semiconductor laser which emits a laser beam of a single wavelength. In the present embodiment, when there is performed operation for reproducing signals of the CD-standard optical disk and the DVD-standard optical disk, the optical path length correction member 6 does not need to be inserted into or removed from the optical path of the laser beam, and reproducing operation can be performed while the optical path length correction member is present in the optical path at all times.

In the present embodiment, a change in optical path length induced by the optical path length correction section 6A formed in the optical path length correction member 6 acts so as to make a correction to aberration in connection with an optical disk having a thick cover layer as in the case of the CD-standard optical disk. Moreover, the change in optical path length acts so as to worsen aberration in connection with an optical disk having a thin cover layer as in the case of the DVD-standard optical disk. However, it has been ascertained that the change in optical path length does not affect operation for reproducing a signal from an optical disk having a thin cover layer, so long as the change in optical path length falls within a range of plus or minus quarter wavelength.

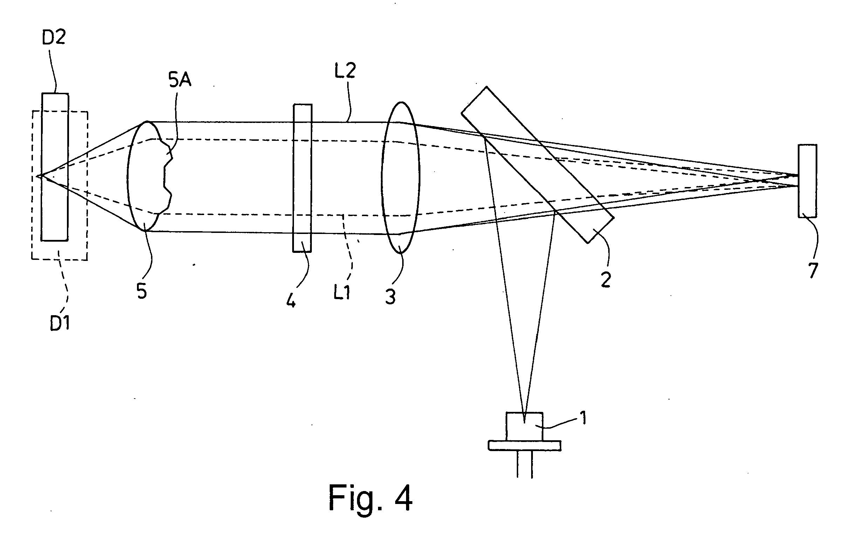

In the previous embodiment, the independent optical path length correction member 6 is interposed between the semiconductor laser 1 and the objective lens 5. However, analogous operation can be also be performed even by forming an optical path correction section 5A in the objective lens 5, as shown in Fig. 4. Even in this case, by means of analogous optical path length correction operation, operation for reproducing signals recorded in optical disks of different standards, such as the CD-standard optical disk and the DVD-standard optical disk, can be performed by the laser beam originating from the semiconductor laser that emits a laser beam of a single wavelength.

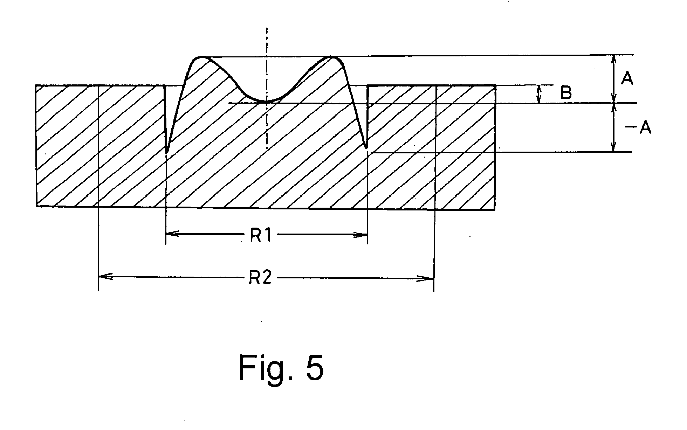

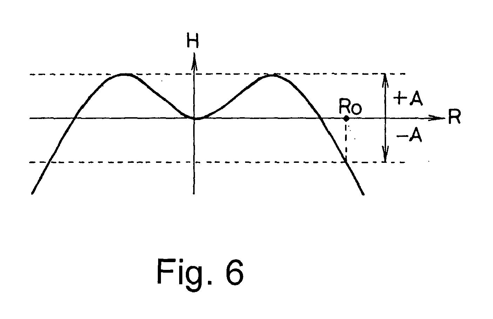

In the previous embodiment, the optical path length correction section 6A formed in the optical path length correction member 6 is formed from the center circular section "a", the toric section "b", the inner inclined section "c", and the outer inclined section "d". However, a shape optimum for better optical path length correction operation will be described by reference to Figs. 5 and 6.

Fig. 5 is a cross-sectional view of the optical path length correction member 6. The shape of the optical path length correction 6A is determined so as to assume a curve. The optical path length correction section has the center circular section and the toric section that protrudes so as to enclose the center circular section concentrically. However, the center circular section remains sunk with respect to the surface of the optical path length correction member 6, and an indentation or a groove is formed further outside the toric section so as to enclose the toric section concentrically. The curved shape of such an optical path length correction section 6A is described by reference to Fig. 6.

In Fig. 6, provided that a height is H and a radius is R, a relational expression showing the curved shape of the optical path length correction section 6A optimum for correcting an optical path length is expressed as H = α × R² + β × R⁴. The value of α and the value of β by means of which the maximum value assumes H = -A at H = +A and R = R₀ are determined as α = 2 × (1 + √2) × A/R₀² and β = - (3 + 2√2) × A/R₀⁴.

Now, as mentioned previously, the value of A is determined from Δd = Δλ × λ/(n-1). However, there will now be described the case where a CD-standard optical disk is used as the first-standard optical disk D1; where a DVD-standard optical disk is used as the second-standard optical disk; where a semiconductor laser-which emits a laser beam having a wavelength of 785 nm used for reproducing a signal in a CD optical disk-is used as the semiconductor laser 1; and where a material having a refractive index of 1.4855 at a wavelength of 780 nm; that is, PMMA (polymethylmethacrylate) of an optical plastic material, is used as the optical path length correction member 6.

In this case, the value of A is a value of Δd of the previously-described equation. The value of a ratio of the value A with respect to a wavelength desired to be changed or corrected becomes Δλ. When Δd is determined on the assumption of Δλ = 0.25, we have Δd = 0.25 × 785 nm/(1.4855-1); namely, 0.404µm. Likewise, the value of B is a value of Δd of the previously-described equation. When Δd is determined on the assumption of Δλ = 0.15, we have Δd = 0.15 × 785 nm/(1.4855 - 1); namely, 0.243 µm.

Thus, the value of A is set to 0.404 µm, and the diameter R1 of the optical path length correction section 6A assumes a value of 2.42 mm. The radius R₀ assumes a value of 1.21 mm, and hence the values are substituted into α = 2 × (1 + √2) × A/R₀², whereby the value of α is acquired as 1.332 × 10⁻³. Likewise, the values are substituted into β = - (3 + 2√2) × A/R₀⁴, whereby the value of β is acquired as -1.098 × 10⁻³.

Therefore, the curved shape of the optical path length correction section 6A acquired in that case is formed according to a relational expression of H = 1.332 × 10⁻³ × R² - 1.098 × 10⁻³ × R⁴.

The curved shape of the optical path length correction section 6A acquired when a semiconductor laser-which emits a laser beam having a wavelength of 785 nm used for reproducing a signal in a CD optical disk-is employed as the semiconductor laser 1, is set as the previously-described relational expression. Next will be described a case where a semiconductor laser emitting a laser beam having a wavelength of 660 nm used for reproducing a signal in a DVD optical disk is employed as the semiconductor laser 1 and where a material showing a refractive index of 1.4884 at a wavelength of 660 nm; namely, an optical plastic material of PMMA, is used as the optical path length correction member 6.

In this case, the value of A is the value of Δd in the previous expression, and the value of a ratio of the value A with respect to the wavelength desired to be changed and corrected becomes Δλ. When Δd is determined on the assumption of Δλ = 0.151, we have Δd = 0.151 × 660 nm/ (1.4884-1); namely, 0.204µm. Likewise, the value of B is the value of Δd of the previous expression. When Δd is determined on the assumption of Δλ = 0.08, we have Δd = 0.08 × 660 nm/(1.4884 - 1); namely, 0.108 µm.

Thus, the value of A is set to 0.204 µm. Further, the diameter R of the optical path correction section 6A assumes a value of 2.42 mm, and the radius R₀ assumes a value of 1.21 mm. Accordingly, the value of α is determined as 6.728 × 10⁻⁴ by means of substituting the respective values into α = 2 × (1 + √2) × A/R₀². Likewise, the value of β is obtained as -1.547 × 10⁻⁴ by means of substituting the respective values into β = -(3 + 2√2) × A/R₀⁴.

Accordingly, the curved shape of the optical path correction section 6A acquired in such a case is formed in accordance with a relational expression of H = 6.728 × 10⁻⁴ × R² - 5.574 × 10⁻⁴ × R⁴.

The embodiment of the present invention has been described thus far. However, the present invention is not limited to this embodiment and is arbitrarily susceptible to modifications within the scope of the present invention. For instance, in the present embodiment, the polarization beam splitter plate 2 is provided with means for imparting astigmatism. However, the means can also be disposed in the optical path between the polarization beam plate 2 and the photodetector 7.

In the present embodiment, the optical path length correction member 6A is formed on the surface of the optical path length correction member 6 facing the objective lens 5. However, the optical path length correction member 6A may also be formed on a face of the optical path length correction member 6 facing the quarter wavelength plate 4.

Moreover, in addition to being disposed in the optical path between the quarter wavelength plate 4 and the objective lens 5, the optical path length correction member 6 of the present embodiment may also be interposed between the collimator lens 3 and the quarter wavelength plate 4. The optical path length correction member 6 can be placed in an arbitrary optical path between the semiconductor laser 1 and the objective lens 5.

Although the optical path length correction member 6 is described as a singlemember in the present embodiment, the optical path correction member may also be configured by combination of a plurality of components.

In the present embodiment, the CD is exemplified as the first-standard optical disk, and the DVD is exemplified as the second-standard optical disk. However, the DVD may also be taken as the first-standard optical disk, and a Blu-ray Disk (BD) may also be taken as the second-standard optical disk. In this case, a laser beam of a violet wavelength conforming to the BD and an objective lens whose numerical aperture complies with the BD are used, and the optical path length correction section 6A is formed so as to coincide with the numerical aperture of the objective lens conforming to the DVD. Thus, a signal recorded in an optical disk complying with the standards of the BD and a signal recorded in an optical disk complying with the standards of the DVD can be read by means of the laser beam of a single wavelength.

## Claims

1. An optical pickup comprising:
a semiconductor laser which emits a laser beam of a single wavelength;
an objective lens for gathering a laser beam emitted from the semiconductor laser onto a signal recording layer provided in each of optical disks of first and second standards whose cover layers differ from each other in terms of a thicknesses; and
an optical path length correction member which is provided in an optical path between the semiconductor laser and the obj ective lens and in which there is formed an optical path length correction section for making a correction to an optical path length in a range smaller than the diameter of a light beam passing through the objective lens.

2. The optical pickup according to claim 1, wherein the optical path length correction section makes a correction to an optical path length of a light beam passing through a range which is a minus quarter or more to a plus quarter or less of a laser wavelength with reference to an optical path length of a center portion of the light beam.

3. The optical pickup according to claim 1 or claim 2, wherein the optical path length correction section is formed from a refracting plane whose continual cross-sectional profile is formed from a straight line or a continual curve.

4. The optical pickup according to any preceding claim, wherein the optical path length correction section is provided on a lens plane of the objective lens.

5. The optical pickup according to any preceding claim, wherein the optical disk of first standards is an optical disk complying with CD standards; the optical disk of second standards is an optical disk complying with DVD standards; and the wavelength of the semiconductor laser conforms to the CD standards.

6. The optical pickup according to any of claims 1 to 4, wherein the optical disk of first standards is an optical disk complying with CD standards; the optical disk of second standards is an optical disk complying with DVD standards; and the wavelength of the semiconductor laser conforms to the DVD standards.

7. The optical pickup according to any of claims 5 and 6, wherein a range in the optical path length correction member where the optical path length correction section is formed is equal to a diameter of a light beam used for reproducing a signal recorded in the optical disk of first standards.

8. The optical pickup according to any preceding claim, wherein the optical path length correction section includes
a center circular section which is formed so as to protrude from a surface of the optical path length correction member; and
a toric section which is formed so as to protrude from the surface of the optical path length correction member so as to annularly surround the center circular section.

9. The optical pickup according to claim 8, wherein an amount of projection of the center circular section and an amount of projection of the toric section are set in accordance with the wavelength of the semiconductor laser.

10. The optical pickup according to any of claims 1 to 7, wherein the optical path length correction section includes
a center circular section which is formed so as to sink below a surface of the optical path length correction member;
a toric section which is formed so as to protrude from the surface of the optical path length correction member so as to annularly surround the center circular section; and
a groove section formed so as to concentrically surround the toric section and sink below the surface of the optical path length correction member.

11. The optical pickup according to claim 10, wherein an amount of sinking of the center circular section, an amount of projection of the toric section, and an amount of sinking of the groove section are set in accordance with the wavelength of the semiconductor laser.
